# EUROPEAN PATENT APPLICATION

(11) **EP 3 640 872 A1**
(43) Date of publication of application: **22.04.2020**
(21) Application number: 19164810.4
(22) Date of filing: 25.03.2019
(51) Int. Cl.: G06Q 10/08, G06Q 50/28

(54) **SHIPMENT OF FIELD DEVICES**

(30) Priority: 18.10.2018 EP 18020518; 21.10.2018 EP 18020537
(71) Applicant: Siemens Healthcare GmbH, 91052 Erlangen (DE)
(72) Inventor: ALBRECHT, Eric, 90482 Nürnberg (DE); NGUYEN, Quoc-Viet, 91054 Erlangen (DE); PERTL, Herbert, 91052 Erlangen (DE); WAGNER, Julian, 90480 Nürnberg (DE); SCHWENGER, Marc, 91074 Herzogenaurach (DE); HORST, Anne, 91054 Erlangen (DE); RABYNOVYCH, Igor, 90762 Fürth (DE)

(57) **Abstract**

A method includes obtaining first measurement data (191) indicative of one or more environmental conditions (301 - 303) of field devices (101 - 103) during a shipment (1001) of the field devices (101 - 103); and obtaining second measurement data (192) indicative of one or more operational conditions (311) of the field devices (101 - 103) during an operation (1002) of the of field devices (101 - 103); and performing a comparison of the first measurement data (191) and the second measurement data (192) to obtain correlation data (193) that is indicative of an impact of the one or more environmental conditions (301 - 303) on the operation (1002) of the field devices (101 - 103).

## Description

### TECHNICAL FIELD

Various examples generally relate to techniques for obtaining transport measurement data indicative of one or more environmental conditions of field devices during a shipment of the field devices. Various examples specifically relate to storing such transport measurement data, monitoring such transport measurement data, and configuring the shipment and/or an operation of the field devices based on such measurement data.

### BACKGROUND

Industrial machines (field devices) are shipped to the operational site. During the shipment, environmental conditions can impose stress on the field devices. For example, the temperature may take values that can cause damage to the field devices. It has been found that the operation of the field devices can often be impaired due to damage occurring during the shipment.

### SUMMARY

Therefore, a need exists for advanced techniques of tracking and configuring the shipment of field devices. More specifically, a need exists for determining an impact of one or more environmental conditions during the shipment of the field devices on the operation of the field devices.

This need is met by the features of the independent claims. The features of the dependent claims define embodiments.

A method includes obtaining first measurement data. The first measurement data is indicative of one or more environmental conditions of field devices during a shipment of the field devices. The method also includes obtaining second measurement data. The second measurement data is indicative of one or more operational conditions of the field devices during an operation of the field devices. The method also includes performing a comparison of the first measurement data and the second measurement data. Thereby, correlation data is obtained. The correlation data is indicative of an impact of the one or more environmental conditions on the operation of the field devices.

A computer program or a computer program product or a computer-readable storage medium includes program code. The program code can be executed by at least one processor. Executing the program code causes the at least one processor to perform a method. The method includes obtaining first measurement data that is indicative of one or more environmental conditions of field devices during a shipment of the field devices. The method also includes obtaining second measurement data that is indicative of one or more operational conditions of the field devices during an operation of the field devices. The method also includes performing a comparison of the first measurement data and the second measurement data, to thereby obtain correlation data. The correlation data is indicative of an impact of the one or more environmental conditions on the operation of the field devices.

A device includes at least one processor and a memory. The at least one processor is configured to load program code from the memory. The at least one processor is configured to execute the program code. When the processor executes the program code this causes the at least one processor to perform a method. The method includes obtaining first measurement data. The first measurement data is indicative of one or more environmental conditions of field devices during a shipment of the field devices. The method also includes obtaining second measurement data. The second measurement data is indicative of one or more operational conditions of the field devices during an operation of the field devices. The method also includes performing a comparison of the first measurement data and the second measurement data, to thereby obtain correlation data. The correlation data is indicative of an impact of the one or more environmental conditions on the operation of the field devices.

For example, the first measurement data may also be labeled transport measurement data. For example, the second measurement data may also be labeled lifecycle measurement data.

A method includes obtaining measurement data that is indicative of one or more environmental conditions of field devices during a shipment of the field devices. The method also includes providing the measurement data to a smart contract stored in a distributed database.

A computer program or a computer program product or a computer-readable storage medium includes program code. The program code can be loaded and executed by at least one processor. When executing the program code the at least one processor performs a method. The method includes obtaining measurement data that is indicative of one or more environmental conditions of field devices during a shipment of the field devices. The method also includes providing the measurement data to a smart contract stored in a distributed database.

A device includes at least one processor and a memory. The at least one processor is configured to load program code from the memory and to execute the program code. Executing the program code causes the at least one processor to perform a method. The method includes obtaining measurement data that is indicative of one or more environmental conditions of field devices during a shipment of the field devices. The method also includes providing the measurement data to a smart contract stored in the distributed database.

A method includes obtaining correlation data that is indicative of an impact of one or more environmental conditions of field devices during a shipment of the field devices on an operation of the field devices. The method also includes configuring at least one of the shipment and the operation of the field devices based on the correlation data.

A computer program or a computer program product or a computer-readable storage medium includes program code. The program code can be loaded and executed by at least one processor. When executing the program code, the at least one processor performs a method. The method includes obtaining correlation data that is indicative of an impact of one or more environmental conditions of field devices during a shipment of the field devices on an operation of the field devices. The method also includes configuring at least one of the shipment and the operation of the field devices based on the correlation data.

A device includes at least one processor and a memory. The at least one processor is configured to load, from the memory, and execute program code. When executing the program code, the processor performs a method. The method includes obtaining correlation data that is indicative of an impact of one or more environmental conditions of field devices during a shipment of the field devices on an operation of the field devices. The method also includes configuring at least one of the shipment and the operation of the field devices based on the correlation data.

It is to be understood that the features mentioned above and those yet to be explained below may be used not only in the respective combinations indicated, but also in other combinations or in isolation without departing from the scope of the invention.

### BRIEF DESCRIPTION OF THE DRAWINGS

FIG. 1 schematically illustrates a cargo container including multiple packaged field devices for shipment, according to various examples.
FIG. 2 schematically illustrates a system including sensor devices, field devices, a server, a distributed database, and a database, according to various examples.
FIG. 3 is a flowchart of a method according to various examples.
FIG. 4 is a flowchart of a method according to various examples.
FIG. 5 schematically illustrates a Blockchain as a distributed database, the Blockchain including a smart contract according to various examples.
FIG. 6 is a flowchart of a method according to various examples.
FIG. 7 schematically illustrates interdependencies between one or more environmental conditions that are considered when determining correlation data, according to various examples.
FIG. 8 schematically illustrates an impact of environmental conditions during shipment on operational conditions during operation of field devices, according to various examples.
FIG. 9 is a flowchart of a method according to various examples.

### DETAILED DESCRIPTION OF EMBODIMENTS

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques are described that facilitate monitoring the shipment of field devices. Measurement data indicative of one or more environmental conditions of the field devices during the shipment (transport measurement data) can be obtained.

As a general rule, the transport measurement data can be indicative of various environmental conditions. More precisely, the transport measurement data can be indicative of one or more values of the one or more environmental conditions as measured by one or more sensor device. For example, environmental conditions may include, e.g.: position; temperature; acceleration; shock; and moisture/humidity. For example, a GPS tracker may be used to determine the absolute position, i.e., latitude and longitude. A temperature sensor can be used to determine the temperature inside the shipped field devices or in the surrounding of the field devices. An acceleration sensor, e.g., a MEMS gyroscope or the like, could be used to detect forces acting upon the field devices, e.g., shock. Humidity can be measured by sensing the moisture. These are only some example environmental conditions and further environmental conditions can be indicated by the transport measurement data in further examples.

Various techniques are based on the finding that the shipment of field devices can at least sometimes require special caution due to the sensitivity/sensibility of the field devices. For example, damage to the field devices can occur due to one or more of the environmental conditions taking extreme values. This can occur, e.g., due to mishandling or accidents during the shipment. Damage to the field devices during the shipment can impair the operation of the field devices. For example, certain functionality of the field devices may not be functional. It would be possible that the lifespan of the field devices is impacted in a negative way.

According to various examples, a relation between (i) the one or more environmental conditions of the field devices during the shipment on the one hand and, on the other hand, (ii) the operation of the field devices is determined or analyzed or predicted. For example, a respective model may be determined based on respective correlation data.

According to various examples, (ii) the operation of the field devices, e.g., certain constraints or limits or a lifecycle, etc., is determined based on (i) the one or more environmental conditions of the field devices during the shipment. This may be based, e.g., on the model determined based on the correlation data.

As a general rule, the kind and type of field devices subject to the techniques described herein can vary from implementation to implementation. To give a few examples of possible types of field devices: medical equipment or spare parts of medical equipment; components of an electric grid, e.g., turbines or turbine blades; engines for railways; subsea equipment; etc.

As will be appreciated, the impact of the one or more environmental conditions during the shipment of the field devices on the operation of the field devices can widely vary, depending on the type of field devices. Therefore, various examples will be described hereinafter that can be applied flexibly to different types of field devices, and to different types of shipment of the field devices.

Various techniques described herein facilitate tracking of the one or more environmental conditions of the field devices during the shipment by employing a distributed database. An example of the distributed database is the Blockchain. Hereinafter, various examples are described in connection with an implementation of the distributed database as a Blockchain. However, similar techniques may also be readily applied to different kinds and types of distributed database or distributed ledgers.

According to various examples, the monitoring of the one or more environmental conditions of the field devices is implemented using smart contracts implemented in a Blockchain. The smart contracts can define executable program logic. The smart contracts may obtain the transport measurement data indicative of the one or more environmental conditions of the field devices during the shipment as an input.

As a general rule, a "smart contract" can relate to an executable program code in connection with the present disclosure. See Henning Diedrich "Ethereum: Blockchains, Digital Assets, Smart Contracts, Decentralized Autonomous Organizations", CreateSpace Independent Publishing Platform, 2016; and "The Ethereum Book Project/Mastering Ethereum" https://github.com/ethereumbook/ethereumbook, 5.10.2017. A smart contract is usually specified as an internal account. Its functions can be called by receiving a transaction form other internal accounts or external, user-controlled accounts.

It is then possible to provide the transport measurement data to a smart contract stored in a Blockchain.

By using the smart contract, it may be possible to track and detect deviations of the one or more environmental conditions from tolerance ranges, e.g., defined using one or more thresholds. This is explained using the following example: transport measurement data is obtained for the shipment of field devices, e.g., of field devices where damage, loss or delay could cause significant costs. For example, the transport measurement data may be acquired using one or more sensor devices having sensors attached to the field devices or a cargo container. The transport measurement data may inelude a GPS position to detect which particular route the cargo container has taken. One or more other physical observables may be a indicated by the transport measurement data. For example, it can be checked whether shock, temperature or pressure may have caused damage to the field device.

The smart contract can perform a comparison between the transport measurement data and a predefined threshold, to thereby track regularities of the shipment. This can be based on execution of respective program code by the smart contract.

A "program code" - such as a smart contract - can relate to a program instruction or multiple program instructions which are saved in one or more transactions, in connection with the present disclosure. The program code can be executable and can be executed, e.g., by the Blockchain. This can be implemented, e.g., by a runtime environment, e.g., of a virtual machine, wherein the runtime environment or the program code are preferably Turing complete. The program code is preferably executed by the infrastructure of the Blockchain. Here, a virtual machine is implemented by the infrastructure of the DBS. It is possible to execute the program code when validating a corresponding transaction.

Depending on whether irregularities are present or not - i.e., depending on a result of the comparison -, the smart contract can selectively store the transport measurement data in the Blockchain. Again, this may involve execution of corresponding program code. For example, if the smart contract detects that the transport measurement data takes values that are outside predefined tolerances - e.g., exceed a predefined threshold -, this can be identified as a scenario in which an impact on the operation of the field devices is likely. Then, corresponding dangerous values of the one or more field devices can be tracked by storing the transport measurement data in the Blockchain.

Using a human machine interface (HMI), e.g., a web-based HMI, the transport measurement data can be inspected manually.

It would also be possible that the smart contract reports the irregularities of the shipment, depending on the result of the comparison. Again, this can be implemented by corresponding program code. For example, damage compensation may be automatically requested from an insurance company of the logistic service provider. Alternatively or additionally, a replacement shipment including a replacement field device could be automatically requested.

In a scenario in which the transport measurement data is indicative of the position of the field device, a root cause or responsible person for the damage can be determined. Generally, such information on the transport measurement data can be used to appropriately (re-)configure the shipment of the field devices, to avoid similar incidents for future shipments. It would be possible to configure an insurance cost or risk assessment of an insurance depending on the comparison implemented by the smart contract.

An additional advantage of storing the transport measurement data in the Blockchain is an increased security against manipulation. This is achieved by the decentralized nature of the Blockchain.

Once the shipment has arrived at the destination, it is possible to confirm that damage to the field device has not been caused. This can trigger compensation of the logistics provider and/or the originator of the field device. This compensation can also be implemented by means of the smart contract.

In some examples, it would be possible to determine an impact of the one or more environmental conditions on the operation of the field devices. This can be done by performing a comparison of the transport measurement data with lifecycle measurement data. The lifecycle measurement data can be indicative of one or more operational conditions of the field devices during the operation of the field devices.

As a general rule, the lifecycle measurement data can be indicative of various operational conditions. The operational conditions can vary for various types of field devices. It would be possible that the one or more operational conditions are indicative of one or more operational performance characteristics of the field devices during their intended use, i.e., during the operation of the field devices. To give a few examples, the one or more operational conditions could be selected from the group comprising: mean time between failure; uptime; downtime; throughput or output of a corresponding product; power consumption of the field devices; lifetime; etc.

By performing the comparison between the transport measurement data and the lifecycle measurement data, it becomes possible to obtain correlation data. The correlation data can be indicative of the impact of the one or more environmental conditions during the shipment on the operation of the field devices.

As a general rule, such correlation data can be used to better obtain information on the system state of the field devices. This can have an impact on the operation of the field devices, e.g., in terms of predictive maintenance etc.

Such comparison between the transport measurement data and the lifecycle measurement data can help to ab-initio derive the correlation data from empirical observations - different to scenarios in which the correlation data is obtained as an output of a model that has been previously configured, e.g., trained.

In an example, it would be possible to configure one or more parameters of a model - e.g., an analytical model or a numerical model - based on the correlation data. For example, it would be possible to train a machine-learned (ML) model. Examples of ML models include: artificial neural networks, support vector machines, etc.. Based on such model, it becomes possible to predict the impact of one or more environmental conditions on the operation of a field device - even prior to commencing the operation or prior to obtaining the lifecycle measurement data. In other words, the model may yield the correlation data as an output, based on the transport measurement data as an input; but without requiring the lifecycle measurement data. For instance, the model may be trained taking into consideration a type of the field device. Thereby, different field devices can be associate with different correlation data, given the same transport measurement data - thereby accounting for different sensitivities or exposures of the field devices to the one or more environmental conditions.

It would also be possible to employ the correlation data, e.g., to configure the shipment and/or the operation of the field devices based on the correlation data. For instance, the correlation data may be obtained as an output of the model.

For example, it would be possible to select at least one of a route, a shipment time, a shipment modality, and the logistics service provider depending on the correlation data.

The operation of the field devices could be configured by selecting at least one of a lifecycle of the respective field device (i.e., time-to-decommissioning), a maintenance timing (predictive maintenance), and a load imposed on the respective field device.

To give a few examples, it would be possible to select a shipment time and a shipment route that is less exposed to certain potentially damaging environmental conditions, e.g., temperature and humidity (e.g., northeast passage from Asia to Europe, instead of Suez Canal routing). To give a further example, if a certain shipment device is determined to have been exposed to potentially damaging environmental conditions during the shipment, the maximum load can be lower during the operation, to thereby compensate for an excess wear-out resulting from the shipment.

These techniques are further explained giving a specific example. A smart sensor can be attached to the field device or the cargo container. The corresponding transport measurement data can be monitored during the shipment. For example, the sensor device can store/buffer the transport measurement data that is indicative of one or more environmental conditions such as temperature, shock, humidity, etc., during the shipment. Once the field component is put into intended use, i.e., once the operation starts, the transport measurement data can be read out and transferred to a database. The transport measurement data could also be read out during commissioning. Alternatively, the transport measurement data may be wirelessly transmitted during the shipment. The database can also store the lifecycle measurement data. It would then be possible to perform the comparison between the transport measurement data and the lifecycle measurement data to obtain the correlation data. The ML model may be trained based on the correlation data. Thereby, the irregularities of the shipment can be identified and tracked. In particular, it becomes possible to determine of the one or more environmental conditions during the shipment can have an influence on the operation of the field device, e.g., reduce the lifecycle. Then, if necessary, certain consequences can be taken such as selecting a different shipment modality such as improved packaging material.

In this regard, it would be possible that the field device is classified into a category. There can be multiple candidate categories having different thresholds for the comparison, depending on the type of the field device. For example, such field devices that are known to be more sensitive or exposed to environmental conditions could be monitor differently than a more robust field device. Once the comparison indicates that a certain threshold is exceeded, it would be possible to trigger an alert report or directly trigger consequences in real time.

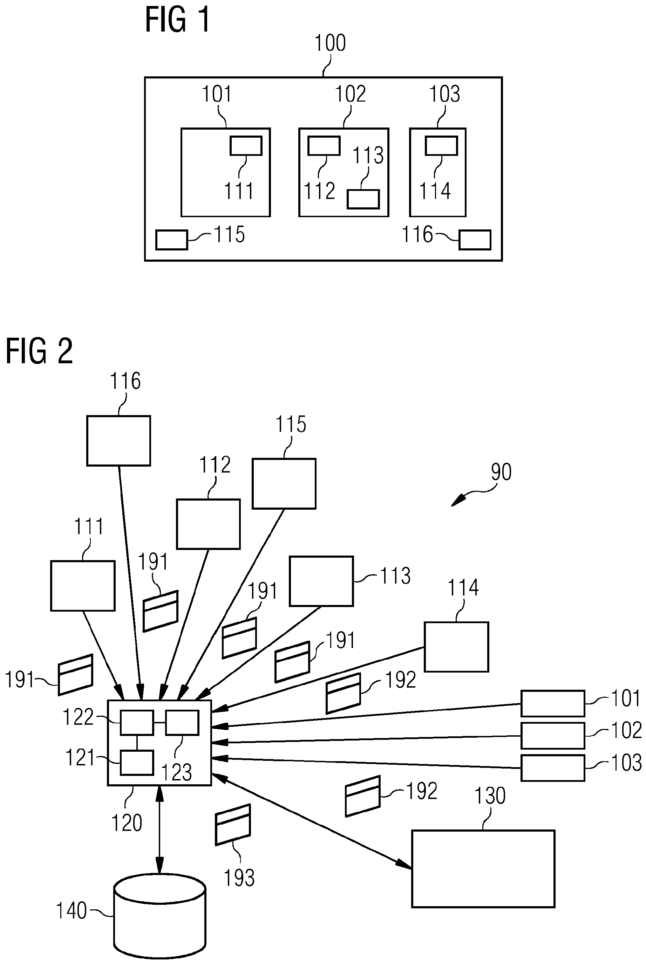

FIG. 1 schematically illustrates aspects with respect to the shipment of multiple field devices 101-103. The field devices 101-103, during shipment, can be packaged. The field devices 101-103, in the example of FIG. 1, are packaged in a cargo container 100.

As illustrated in FIG. 1, there are sensor devices 111-116. Some of the sensor devices 111-114 are mounted to the field devices 101-103; while other sensor devices 115-116 are mounted to the cargo container 100. The sensor devices 111-116 may each include a respective sensor that is configured to measure one or more physical observables that are associated with one or more environmental conditions. As an example, the one or more environmental conditions may be selected from the group comprising: position; temperature; acceleration; shock; and moisture. Different ones of the sensor devices 111-116 can measure different physical observables associated with different environmental conditions.

It would be possible that the sensor devices 111-116 are configured to measure a time series of the one or more environmental conditions. Thereby, temporary deviations from a norm can be identified.

The one or more environmental conditions as measured by the sensor devices 111-116 can be written to transport measurement data. The transport measurement data may include a respective time series. For example, the transport measurement data may be buffered in a memory of one or more of the sensor devices 111-116, e.g., until commissioning of the field devices 101-103. Alternatively or additionally, it would also be possible to wirelessly transmit, during shipment, the transport measurement data to a server. A Machine Type Communication (MTC) or Internet of Things connection technique may be used. A cellular connection may be used.

In some examples, it would be possible that the various sensor devices 111-116 of the cargo container 100 and the field devices 101-103 shipped together wirelessly communicate with each other, e.g., using near-range wireless communication. For instance, one of the sensor devices 111-116 may be equipped with a long-range wireless transceiver, e.g., a cellular modem; while the other sensor devices 111-116 may not be equipped with a long-range wireless transceiver. Then, the particular sensor device having the wireless transmitter can perform group-head functionality, i.e., report the transport measurement data for the other sensor devices 111-116.

Such transport measurement data acquired using the sensor devices 111-116 can be used to track irregularities of the shipment. For this, one or more servers and one or more databases may be employed. Corresponding techniques are illustrated in connection with FIG. 2.

FIG. 2 schematically illustrates aspects with respect to a system 90. The system 90 is configured to implement tracking of the shipment of the field devices 101-103. The system 90 is configured to determine an impact of one or more environmental conditions during the shipment on the operation of the field devices 101-103.

The system 90 includes the sensor devices 111-116, as described above in connection with FIG. 1.

As illustrated in FIG. 2, the sensor devices 111-116 report the transport measurement data 191 to a server 120.

The server 120 includes an interface 121 via which it can obtain the transport measurement data that is indicative of the one or more environmental conditions of the field devices 101-103 during the shipment of the field devices 101-103. The server 120 also includes a processor 122 that can perform one or more logic operations on the transport measurement data 191. For this, the processor 122 can load program code that is stored in a memory 123 and can execute the program code. Executing the program code loaded from the memory 123 can cause the processor 122 to perform various techniques as described herein, e.g., in connection with performing a comparison of the transport measurement data 191 with one or more thresholds; feeding the transport measurement data 191 to a model to obtain correlation data 193 that is indicative of an impact of the one or more environmental conditions on the operation of the field devices 101-103; configuring the shipment; configuring the operation of the field devices 101-103; providing the transport measurement data 191 to a smart contract of a Blockchain of a Blockchain infrastructure 130; storing the transport measurement data in a database 140; etc.

In the example of FIG. 2, the system 90 also includes the field devices 101-103. The field devices 101-103 can report lifecycle measurement data 192. The lifecycle measurement data 192 can be obtained by the server 120 via the interface 121. According to various examples, the processor 122 could be configured to perform a comparison between the transport measurement data 191 and the lifecycle measurement data 192, e.g., to obtain the correlation data 193.

For example, it would be possible that the correlation data 193 is stored in the database 140 and/or stored in the Blockchain of the Blockchain infrastructure 130. The Blockchain infrastructure 130 includes multiple nodes (not illustrated in FIG. 2).

The terms "blockchain node", "node", "node of a blockchain infrastructure" and the like can relate, in the context of the present disclosure, to devices - e.g., mobile devices, wireless communication devices, computers, smartphones, clients or participants - that perform operations associated with the blockchain. Such nodes can, e.g., confirm transactions of the Blockchain or the respective data blocks or can insert new data blocks including new transactions into the Blockchain by means of new data blocks. In particular, this validation and/or chaining can be implemented by a trusted node, e.g., a mining node, or exclusively by trusted nodes. A trusted node is a node that has additional security measures - e.g., firewalls, access restrictions to the node or the like - to avoid manipulation of the node. Alternatively or additionally, a trusted node can, e.g., save a node checksum - e.g., a digital signature or a certificate - in the new data block when chaining the new data block with the Blockchain. Thereby, it is possible to provide the proof that indicates that the respective data block has been inserted by a specific node, respectively indicate the originator.

Next, details regarding the functioning of the system 90 will be described in detail with respect to the following Figures.

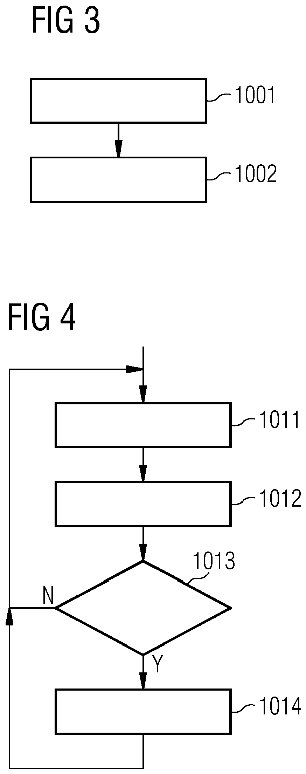

FIG. 3 is a flowchart of a method according to various examples. The flowchart of FIG. 3 illustrates a shipment 1001 and an operation 1002.

During the shipment 1001, the field devices 101-103 are not operated, but rather transported to an intended destination. For example, the field devices 101-103 can be packaged. A logistics service provider can ship the field devices 101-103, e.g., from a production or cargo hub to a operational site.

During the operation 1002, the field devices 101-103 are put to their intended use. For example, in case the field devices 101-103 are medical devices or components of medical devices, the medical devices can be used for the medical purpose, e.g., medical imaging, surgery, etc.

FIG. 4 is a flowchart of a method according to various examples. For example, the method of FIG. 4 may be executed by a processor of a computer or server. Hereinafter, the techniques of FIG. 4 will be described in connection with the processor 122 of the server 120, according to the system 90 as explained above in connection with FIG. 2. However, similar techniques may be readily performed by other kinds and types of processors, computers or servers, e.g., by mining nodes of the Blockchain infrastructure 130, etc.

At block 1011, the transport measurement data 191 is obtained, e.g., via the interface 121 from the sensor devices 111-116.

Next, at block 1012, the transport measurement data is provided to a smart contract that is stored in the Blockchain of the Blockchain infrastructure 130.

The term "providing" - in particular in regard to data and/or information - can relate to a computer-implemented providing in connection with the present disclosure. Said providing may be implemented by an interface, e.g., a database interface, a network interface, an interface to a memory unit. It is possible that respective data and/or information are communicated and/or transmitted and/or retrieved and/or received when providing via the interface.

The term "providing" can also relate to a loading or saving, e.g., of a transaction together with respective data in the context of the present disclosure. For example, this can be implemented on or by a memory module.

The term "providing" can also relate to communicating (or transmitting or receiving or transfer) of respective data from a node to another node of the blockchain in the context of the present disclosure.

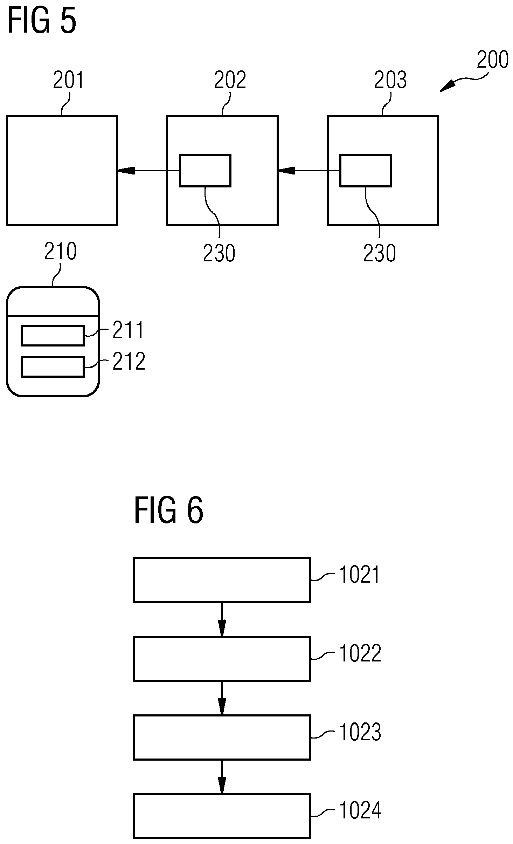

Details with respect to the smart contract 210 and the Blockchain 200 are described in connection with FIG. 5.

FIG. 5 schematically illustrates the Blockchain 200. For example, the Blockchain 200 may be stored in a distributed manner on multiple mining nodes of the Blockchain infrastructure 130. The Blockchain 200 includes multiple data blocks 201-203. The data blocks 201-203 can include transactions. For example, the data block 202 includes a checksum 230 that in some examples is determined, at least partly, based on the preceding data block 201 of the Blockchain 200 - e.g., a chaining checksum. Thereby, modification or tampering with the content of the Blockchain 200 becomes difficult.

As a general rule, a data block can, e.g., include indications of the size - e.g., data volume in bytes- of the data block, a data block header (block header), a transaction counter and one or more transactions. The data block header can include a version, a chaining checksum, a data-block checksum, a timestamp, a proof of work, a Nonce - i.e., a unique value, a random value or a counter which is used for the proof of work. A data block can, e.g., also simply relate to a respective memory range or address range of the overall data that is stored in a distributed database; thereby, it is possible to implement blockless distributed database such as the IOT chain (ITCA), IOTA, Byteball, etc. Here, the functionality of the blocks of a blockchain and of the transactions are combined with each other in such a manner that, e.g., the transactions themselves secure the sequence or chains of transactions of the distributed database, such that they are, in particular, saved in a secured manner. For this the transactions can be chained by means of a chaining checksum, e.g., by using a separate checksum or the transaction checksum of one or more transactions as chaining checksum, which is saved in a new transaction in the DBS when storing the new transaction in the distributed database. In such a scenario, a data block can, e.g., also include one or more transactions, wherein in a simple scenario a data block relates to a single transaction.

The term "Nonce" can relate to, in connection with the present disclosure, a cryptographic nonce - which is an abbreviation for "used only once" [2] or "number used once" [3]. In particular, a Nonce indicates individual numbers or a combination of letters that is preferably only used once in the respective context, e.g., transaction, data communication.

A "checksum", e.g., a data-block checksum, a data checksum, a node checksum, a transaction checksum, a chaining checksum or the like can relate to a cryptographic checksum or a cryptographic hash or hash value, in the context of the present disclosure. Such checksums can, in particular, be determined across a data set and/or data and/or one or more transactions and/or a subsection of a data block, e.g., the block header of a block of the blockchain or the data block header of a data block of a Blockchain or only a part of the transaction of a data block. A checksum can be specifically implemented by a checksum or checksums or a hash value or hash values of a hash tree, e.g., a Merkle tree, a Patricia tree. Moreover, a "checksum" can also be implemented by a digital signature or a cryptographic message authentication code. By means of checksums, it is possible to implement cryptographic protection/protection against manipulation for transactions and the associated data and datasets on various levels of the Blockchain. For example, if there is a need for an increased level of security, it would be possible to create and validate checksums on transaction level. For example, if a reduced level of security is required, then it would be possible to create and validate checksums on block level - e.g., across the entire block or only across a part of the data block and/or a part of the transaction. A "chaining checksum" in the context of the present disclosure can relate to a checksum which for the respective data block of a Blockchain indicates or references to a preceding data block of the Blockchain - which is often referred to as "previous block hash" in literature. For this, in particular, a respective chaining checksum is determined for the preceding data block. The chaining checksum can be implemented, e.g., by a transaction checksum or a data-block checksum of a data block, i.e., of an existing data block of the Blockchain; to thereby chain a new data block with a (existing) data block of the Blockchain. For example, it would also be possible that a checksum is determined across a header of the preceding data block or across the entire preceding data block to be used as a chaining checksum. For example, this could also be calculated for multiple or all of the preceding data blocks. For example, the chaining checksum could also be implemented by a checksum determined across the header of a data block in the data-block checksum. A respective data block of the Blockchain includes, however, preferably a chaining checksum that has been calculated or relates to a preceding data block, specifically, the next-neighbor preceding data block directly adjacent to the respective data block. For example, it would also be possible that a respective chaining checksum is determined only across a part of the respective data block, e.g., the preceding data block. Thereby, a data block can be implemented which has an integrity protected part and a non-protected part. Thereby, a data block can be implemented that has a non-changeable integrity protected part and that has a non-protected part that can be modified later on. Integrity protected can mean that a change of the integrity protected data can be detected by means of a checksum.

Next, example implementations of a transaction are described. The data - that is, e.g., stored in a transaction of a data block - can be provided in various manners. Instead of data - e.g., user data such as measurement data or data/ownership structure regarding ASICs - a transaction of a data block can rather include the checksum for such data. The respective checksum can be implemented in various manners. For example, a respective data-block checksum of a data block, e.g., including the respective data, of another database or of the DBS, a transaction checksum of a data block of the respective data, e.g., of the Blockchain or of another database 140, or a data checksum determined across the data can be used. In addition, the respective transaction can optionally include a link to or an indication of a memory position - e.g., an address of a file server and indications where the respective data are to be found on the file server; or an address of another DBS which includes the data. The respective data could, e.g., also be provided in a further transaction of a further data block of the Blockchain - e.g., if the respective data and the associated checksums are included in different data blocks. It would also be possible that those data are provided via another communication channel - e.g., via another database and/or a cryptographically-secured communication channel. Further, it would be possible that in addition to the checksum an add-on data set - e.g., a link or an indication to a memory position - is provided in the respective transaction. The add-on data set can, in particular, indicate where the data can be retrieved. This can be helpful to limit the amount of data of the Blockchain.

It is possible to implement a smart contract 210 on the Blockchain 200. For this, the data blocks 201-203 and may store the smart contract 210 that can include program code. When the smart contract 210 is provided with an input, one or more functions 211 of the smart contract 210 may be executed based on the input. One or more result variables 212 may be stored in the smart contract 210, as a newly inserted transaction of the Blockchain 200 associated with the smart contract 210.

Insertion of transactions into a Blockchain can include chaining of data blocks of a DBS. The term "chaining of data blocks of a DBS" in the connection of the present disclosure can relate to the data blocks respectively including information (such as the chaining checksum) which links to another data block or multiple other data blocks of the Blockchain. Insertion of transactions can include validating and/or confirming transactions. The term "insertion of transactions" and the like can relate to communicating a transaction or transactions or a data block including the transactions to one or more nodes of the Blockchain infrastructure. If those transactions are successfully validated, e.g., by means of the one or more nodes, these transactions can be chained as a new data block with at least one existing data block. For this, the respective transactions are stored in a new data block. In particular, this validating and/or chaining can be implemented by a trusted node, e.g., a mining node, a blockchain oracle or a blockchain platform.

Referring again to FIG. 4: in block 1012, the transport measurement data 191 is provided to the smart contract 210 of the Blockchain. This can be performed in an automated manner. Thereby, one or more check or control tasks can be triggered automatically, by means of the smart contract 210.

For example, in the scenario of FIG. 4, it would be possible that the smart contract 210 performs a comparison between the transport measurement data 191 and a predefined threshold, to thereby track irregularities of the shipment of the field devices 101-103.

For example, the predefined threshold may be associated with certain tolerances of the one or more environmental conditions that are known or assumed to be safe, i.e., that do not cause damage to the one or more field devices 101-103 such that the operation thereof would be impaired. For instance, it would be possible that a type of the field devices 101-103 is provided to the smart contract 210, wherein the smart contract 210 determines the threshold based on the type of field devices. Thereby, the threshold can be tailored to the sensitivity of the various types of field devices 101-103 to damage.

As a general rule, depending on an outcome of such a comparison between the transport measurement data 191 and the threshold, various actions may or may not be taken. In the example of FIG. 4, if there are no irregularities detected at block 1013, then no particular action is taken and the method re-iterates block 1011, e.g., for transport measurement data newly obtained, i.e., updated transport measurement data of a corresponding time series. On the other hand, if, in block 1013, irregularities are detected, the method commences with block 1014.

At block 1014, various actions can be taken, depending on the particular implementation. For example, it would be possible that the smart contract 210 stores the transport measurement data 191 in the Blockchain 200 - e.g., includes a respective value 212 in a transaction of the next block 201-203 of the Blockchain 200 - if the result of the comparison is such that irregularities are present. Thereby, the critical transport measurement data 191 is stored for later inspection; while non-critical transport measurement data can be discarded, to avoid excessive memory usage in the Blockchain 200.

Alternatively or additionally to such selective storage of the transport measurement data 191 in the Blockchain 200, other actions may or may not be taken depending on the result of the comparison. For instance, it would be possible that the smart contract 210 reports the irregularities of the shipment 1001 depending on the result of the comparison, at block 1014. For example, the irregularities of the shipment may be reported by providing the transport measurement data 191 or an indicator indicative of the transport measurement data 191. The reporting may be to an operator of the field devices 101-103, to an originator/manufacturer of the field devices 101-103, to the logistics service provider, and/or an insurance company.

As will be appreciated, by such techniques as described in connection with FIG. 4 above, it becomes possible to build a zero-human intervention system that triggers an automatic procedure when abnormal events associated with the shipment 1001 of the field devices 101-103 are detected. Key information can be registered to the Blockchain 200. Thereby, highly secure and trustable information on the shipment 1001 can be obtained.

The threshold of the comparison at block 1013 can be determined in various manners. In a simple example, the threshold may be determined based on an empirical analysis of previous shipment and operation of corresponding field devices 101-103, e.g., using expert knowledge. It would also be possible to take into account, e.g., simulations of the operation of the field devices 201-203, of the wear-out of particular components of the field devices 201-203 depending on the one or more environmental conditions, etc. In further examples, it would be possible to determine the threshold based on the correlation data 193. The correlation data 193 can be indicative of an impact of the one or more environmental conditions on the operation of the field devices 101-103. The correlation data 193 can be obtained from measurements. For example, an ML algorithm can be used to obtain the correlation data 193. Respective techniques are illustrated in connection with FIG. 6.

FIG. 6 is a flowchart of a method according to various examples. The method of FIG. 6 may be executed by a computer, e.g., a server. For example, the method of FIG. 6 may be executed by the processor 122 of the server 120, e.g., upon loading program code from the memory 123. Hereinafter, FIG. 6 is described in connection with an example according to which the processor 122 of the server 120 of the system 90, as described in connection with FIG. 2, executes the method of FIG. 6. However, in other examples, the method of FIG. 6 may be executed by other processors, computers, servers, nodes, or devices.

At block 1021, the transport measurement data 191 is obtained, e.g., via the interface 121 from the sensor devices 111-116.

At block 1022, the lifecycle measurement data 192 is obtained, e.g., via the interface 121 from the field devices 101-103. The lifecycle measurement data 192 is indicative of one or more operational conditions of the field devices 101-103 during the operation 1002.

Next, at block 1023, a comparison between the transport measurement data 191 obtained in block 1021 and the lifecycle measurement data obtained in block 1022 is performed. Thereby, the correlation data 193 is obtained. The correlation data is indicative of an impact of the one or more environmental conditions, as indicated by the transport measurement data 191, on the operation of the field devices 101-103.

Thereby, the correlation data 193 is indicative of a system state of the field devices 101-103. For example, the correlation data 193 may be indicative of a reduced lifecycle/durability of the field devices 101-103, due to the one or more environmental conditions present during the shipment 1001.

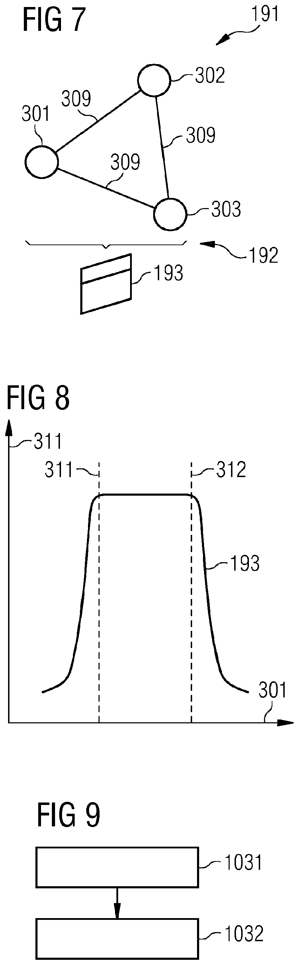

As a general rule, there are various options available for implementing the comparison that is performed in block 1023. In particular, it would be possible to consider transport measurement data 191 that is indicative of multiple environmental conditions, e.g., temperature and pressure and humidity, etc., to give just one example. Such a scenario is schematically illustrated in FIG. 7. In the scenario of FIG. 7, the transport measurement data 191 is indicative of a total of three environmental conditions 301-303. The comparison considers interdependencies 309 between the multiple environmental conditions 301-303. Considering these interdependencies, the comparison against the lifecycle measurement data 192 can be performed, to obtain the correlation data 193, as illustrated in FIG. 7.

The correlation data 193 obtained from the comparison of block 1023 thus provides insights into the impact of the one or more environmental conditions 301-303 on the operation of the field devices 101-103. This impact can be used to better understand the state in which the field devices 101-103, after the shipment 1001, operate. An example scenario illustrating this impact of the one or more environmental conditions 301-303 on the operation of the field devices 101-103 is illustrated in connection with FIG. 8.

FIG. 8 schematically illustrates aspects with respect to the correlation data 193. FIG. 8 schematically illustrates the impact of the environmental condition 301 - e.g., temperature - on the operational condition 311 - e.g., seal tightness - of the field devices 101-103. As illustrated in FIG. 8, as long as the temperature 301 remains above the lower threshold 311 and below the upper threshold 312, the seal tightness 311 is not degraded. If the temperature 301, however, falls below the threshold 311 or exceeds the threshold 312, the correlation data 193 is indicative of a degraded seal tightness 311.

Referring again to FIG. 6: as a general rule, various options are available of making use of the correlation data 193, in block 1024.

In a first example, the correlation data 193 may be presented to an expert to make judgments on the operation 1002 of the field devices 101-103, using expert knowledge.

In a second example, it would be possible that the correlation data 193 is analyzed to, e.g., yield characteristics such as the thresholds 311, 312. Then, one or more of such thresholds 311, 312 may be provided to the smart contract 210, to facilitate the above-described automatic analysis of the transport measurement data 191 in the Blockchain 200 (cf. FIG. 4).

In a third example, it would be possible that as part of block 1024, the transport measurement data 191 and/or the lifecycle measurement data 192 and/or the correlation data 193 is provided to the Blockchain 200, e.g., to the smart contract 210.

In a fourth example, the correlation data 193 can be used to train a more complex model, e.g., an analytical model or an ML model. This is explained next. Sometimes, an explicit impact of the environmental condition 301 on the operation of the field devices 101-103 in the form of the operational condition 311 is present (e.g., cf. FIG. 8 where the correlation data 193 shows a well-defined unambiguous dependency). Such scenarios can be adequately covered by the thresholds 311, 312; or using analytical models. However, in some scenarios, the correlation data 193 may not need to define such an explicit behavior. Rather, less explicit or more complicated impacts and dependencies can be present. Such less explicit impacts can often be appropriately captured by a ML model. Accordingly, it would be possible that the correlation data 193 is used to train a ML model. The machine-learning model could then be used to predict the correlation data 193 for transport measurement data 191, even without having to monitor the particular operational conditions 311 of the field devices 101-103 during the operation 1002.

As illustrated above, the correlation data 193 sheds light on the impact of the one or more environmental conditions 301-303 on the operation 1002 of the field devices 101-103. The correlation data 193 can thus be used to determine or train a predictive model such that for future shipments the impact of the respective one or more environmental conditions 301-303 on the operation 1002 of the field devices 101-103 can be determined by determining the correlation data 193 using the model. In particular, in such a scenario the correlation data 193, by using the model, can be determined in a predictive manner, e.g., even before commencing the operation 1002 of the field devices 101-103. Then, one or more countermeasures, etc. may be undertaken. A corresponding scenario is described next in connection with FIG. 9.

FIG. 9 is a flowchart of a method according to various examples. For example, the method of FIG. 9 may be executed by a server, e.g., may be executed by the processor 122 of the server 120 according to the example of FIG. 2. Hereinafter, details with respect to the method according to FIG. 9 will be explained in connection with an implementation where the method is executed by the processor 122, e.g., based on program code loaded from the memory 123, of the server 120 of the system 90 according to the example of FIG. 2. However, it should be understood that similar techniques may be readily performed by other processors, computers, servers, etc.

First, at block 1031, the correlation data 193 is obtained. The correlation data 193 is indicative of an impact of one or more environmental conditions 301-303 of the field devices 101-103 during the shipment of the field devices 101-103, on the operation 1002 of the field devices 101-103.

As a general rule, there are various options available for obtaining the correlation data 193. In a first example, it would be possible that the method according to FIG. 6 is performed. Here, the correlation data 193 is determined ab-inito by comparing the transport measurement data 191 and the lifecycle measurement data 192. In a second example, the correlation data 193 may be obtained by executing the ML model having the transport measurement data 191 as an input and having the correlation data 193 as an output. For example, the ML model may have been trained as part of block 1024 of FIG. 6. In yet another example, the correlation data 193 may be simply loaded from the database 140 (cf. FIG. 2).

Next, at block 1032, the shipment 1001 and/or the operation 1002 of the field devices 101-103 is configured, based on the correlation data 193. I.e., information on the impact of the one or more environmental conditions 301-303 of the field devices 101-103 during the shipment 1001 is used to adjust, e.g., the shipment 1001 and/or the operation 1002.

As a general rule, various countermeasures may be taken in block 1032, e.g., in case the correlation data 193 is indicative of damaged or impaired operation 1002 of the field devices 101-103. To give a few examples, it would be possible that the shipment 1001 is configured by selecting at least one of a route, a shipment time, a shipment modality, and a logistics service provider. For example, where shipment 1001 using air transport indicates that the temperature falls below a certain threshold 311 that causes an empire sealing tightness 311 (cf. FIG. 8), the shipment modality may be changed from air cargo to train cargo, etc. For example, the route may be chosen so as to avoid excess temperatures exceeding the threshold 312 that can cause a reduced sealing tightness 311 (cf. FIG. 8).

Alternatively or additionally to configuring the shipment 1001 in block 1032, it would also be possible to configure the operation 1002 of the field devices 101-103. For example, it would be possible to select at least one of a lifecycle of the respective field device 101-103, a maintenance timing (predictive maintenance), and a load imposed on the respective field device 101-103. Thereby, it would be possible to counter, at least to some degree, negative impact of the one or more environmental conditions 301-303 during the shipment 1001 on the operation 1002 of the field devices 101-103. To give an example, in a case where the temperature 301 falls below the lower temperature threshold 311, the sealing tightness 311 may be impaired; this may be countered by increasing the operation rate of a corresponding pump, so that the pressure level can be maintained in an acceptable range.

As will be appreciated from the above, by such techniques precise prediction of possible damage or failures of field devices 101-103 becomes possible. Downtimes can be reduced and warranty claims can be avoided. Fleet management during the shipment 1001 can be improved. Cost savings by avoidance of clarification/administration efforts can be obtained. Express deliveries become possible. Warehouse stock can be reduced to the reduction of unplanned occurrences/material failures.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For illustration, above various examples have been described in connection with a scenario in which a Blockchain is employed as distributed database. In other examples, it would be possible that a non-distributed, centralized database is employed. In yet other examples, it would be possible that the distributed database is implemented block-less.

## Claims

1. A method, comprising:
- obtaining first measurement data (191) indicative of one or more environmental conditions (301 - 303) of field devices (101 - 103) during a shipment (1001) of the field devices (101 - 103),
- obtaining second measurement data (192) indicative of one or more operational conditions (311) of the field devices (101 - 103) during an operation (1002) of the of field devices (101 - 103), and
- performing a comparison of the first measurement data (191) and the second measurement data (192) to obtain correlation data (193) that is indicative of an impact of the one or more environmental conditions (301 - 303) on the operation (1002) of the field devices (101 - 103).

2. The method of claim 1,
wherein the first measurement data (191) is indicative of multiple environmental conditions (301 - 303),
wherein the comparison between the first measurement data (191) and the second measurement data (192) considers interdependencies (309) between the multiple environmental conditions (301 - 303).

3. The method of claim 1 or 2,
wherein the correlation data (193) is used to train a machine-learned model.

4. The method of any one of the preceding claims, further comprising:
- providing at least one of the first measurement data (191), the second measurement data (192), and the correlation data (193) to a smart contract (210) stored in a distributed database (200).

5. A method, comprising:
- obtaining measurement data (191) indicative of one or more environmental conditions of field devices (101 - 103) during a shipment (1001) of the field devices (101 - 103), and
- providing the measurement data (191) to a smart contract (210) stored in a distributed database (200).

6. The method of claim 5,
wherein the smart contract (210) performs a comparison between the measurement data (191) and a predefined threshold, to track irregularities of the shipment.

7. The method of claim 6, further comprising:
- providing a type of the field devices (101 - 103) to the smart contract (210), the smart contract (210) determining the predefined threshold based on the type of the field devices.

8. The method of claim 6 or 7,
wherein the smart contract (210) selectively stores the measurement data (191) in the distributed database (200) depending on a result of the comparison.

9. The method of any one of claims 6 to 8,
wherein the smart contract (210) reports the irregularities of the shipment (1001) depending on a result of the comparison.

10. A method, comprising:
- obtaining correlation data (193) that is indicative of an impact of one or more environmental conditions (301 - 303) of field devices (101 - 103) during a shipment (1001) of the field devices (101 - 103) on an operation (1002) of the field devices (101 - 103), and
- configuring at least one of the shipment (1001) and the operation (1002) of the field devices (101 - 103) based on the correlation data (193).

11. The method of claim 10,
wherein the shipment (1001) is configured by selecting at least one of a route, a shipment time, a shipment modality, and a logistics service provider.

12. The method of claim 10 or 11,
wherein the operation of the field devices is configured by selecting at least one of a lifecycle of the respective field device a maintenance timing, and a load imposed on the respective field device.

13. The method of any one of claims 10 to 12, and of claim 3,
wherein the correlation data (193) is obtained as an output of the machine-learned model.

14. The method of any one of the preceding claims,
wherein the one or more environmental conditions are selected from the group comprising: position; temperature; acceleration; shock; and moisture.

15. A computer program comprising program code that is executable by at least one processor, wherein executing the program code causes the at least one processor to perform the method according to any one of the preceding claims.

## Amended claims

### Amended claims in accordance with Rule 137(2) EPC.

1. A computer-implemented method, comprising:
- obtaining first measurement data (191) indicative of one or more environmental conditions (301 - 303) of field devices (101 - 103) measured by one or more sensor device (111-116) during a shipment (1001) of the field devices (101 - 103),
- obtaining second measurement data (192) indicative of one or more operational conditions (311) of the field devices (101 - 103) during an operation (1002) of the field devices (101 - 103),
- performing a comparison of the first measurement data (191) and the second measurement data (192) to obtain correlation data (193) that is indicative of an impact of the one or more environmental conditions (301 - 303) on the operation (1002) of the field devices (101 - 103), and
- determining an impact of the one or more environmental conditions (301 - 303) on the operation of the field devices (101 - 103) based on the correlation data (193).

2. The method of claim 1,
wherein the first measurement data (191) is indicative of multiple environmental conditions (301 - 303),
wherein the comparison between the first measurement data (191) and the second measurement data (192) considers interdependencies (309) between the multiple environmental conditions (301 - 303).

3. The method of claim 1 or 2,
wherein the correlation data (193) is used to train a machine-learned model.

4. The method of any one of the preceding claims, further comprising:
- providing at least one of the first measurement data (191), the second measurement data (192), and the correlation data (193) to a smart contract (210) stored in a distributed database (200).

5. The method according to claim 1, further comprising:
- providing the first measurement data (191) to a smart contract (210) stored in a distributed database (200).

6. The method of claim 5,
wherein the smart contract (210) performs a comparison between the first measurement data (191) and a predefined threshold, to track irregularities of the shipment.

7. The method of claim 6, further comprising:
- providing a type of the field devices (101 - 103) to the smart contract (210), the smart contract (210) determining the predefined threshold based on the type of the field devices.

8. The method of claim 6 or 7,
wherein the smart contract (210) selectively stores the first measurement data (191) in the distributed database (200) depending on a result of the comparison.

9. The method of any one of claims 6 to 8,
wherein the smart contract (210) reports the irregularities of the shipment (1001) depending on a result of the comparison.

10. The method according to claim 1, further comprising:
- configuring at least one of the shipment (1001) and the operation (1002) of the field devices (101 - 103) based on the correlation data (193).

11. The method of claim 10,
wherein the shipment (1001) is configured by selecting at least one of a route, a shipment time, a shipment modality, and a logistics service provider.

12. The method of claim 10 or 11,
wherein the operation of the field devices is configured by selecting at least one of a lifecycle of the respective field device a maintenance timing, and a load imposed on the respective field device.

13. The method of any one of claims 10 to 12, and of claim 3,
wherein the correlation data (193) is obtained as an output of the machine-learned model.

14. The method of any one of the preceding claims,
wherein the one or more environmental conditions are selected from the group comprising: position; temperature; acceleration; shock; and moisture.

15. A device including at least one processor and a memory, wherein the at least one processor is configured to load, from the memory, and execute program code, wherein executing the program code causes the at least one processor to perform the method according to any one of the preceding claims.
